# EUROPEAN PATENT APPLICATION

(11) **EP 4 847 764 A1**
(43) Date of publication of application: **02.12.2026**
(21) Application number: 25179056.4
(22) Date of filing: 27.05.2025
(51) Int. Cl.: F02K 1/76

(54) **AN ACTUATION SYSTEM FOR AN AIRCRAFT THRUST REVERSER SYSTEM**

(71) Applicant: Goodrich Actuation Systems Limited, Wolverhampton, West Midlands WV10 7EH (GB)
(72) Inventor: PALMA, Amodio, Blackwell (GB); HUBBERSTEY, Mark, Stafford (GB); AVALA, Lakshmi Shirindra Venu Gopal, Wolverhampton (GB); ADAMS, Bruce John, Wolverhampton (GB)
(74) Representative: Casalonga

(57) **Abstract**

An actuator system for an aircraft thrust reverser system, the actuator comprising a first actuator, a second actuator and a connection system. The connection system is configured to connect the first actuator and the second actuator, such that the first actuator and second actuator are in hydraulic communication to hydraulically constrain the first actuator and the second actuator.

## Description

### Technical Field

This disclosure relates to an actuator system, an aircraft thrust reverser system and an aircraft.

### Background

Actuator systems are commonly used to move aircraft control surfaces. Some actuator systems (such as those for aircraft thrust reverser systems) require two or more actuators to operate in a synchronised manner to allow the system to operate effectively. This is often achieved using traditional mechanical synchronising systems and components, typically comprising components such as sync nuts, screwshafts, worm wheel gears and flexshafts, which can be complex, heavy and expensive.

### Summary

According to a first aspect, there is provided an actuator system for an aircraft thrust reverser system, the actuator comprising a first actuator, a second actuator and a connection system, wherein the connection system is configured to connect the first actuator and the second actuator, such that the first actuator and second actuator are in hydraulic communication to hydraulically constrain the first actuator and the second actuator.

The first actuator and the second actuator may be hydraulic constrained such that movement of the first actuator and the second actuator is substantially synchronised.

By hydraulically constraining the first actuator and the second actuator hydraulically constrained, the movement of the actuators may be substantially synchronised without the use of a complex traditional mechanical synchronising system. This allows the actuator system to be lighter, cheaper and easier to manufacture.

The actuator system may further comprise a hydraulic supply system, the hydraulic supply system configured to supply hydraulic fluid to the actuator system.

The first actuator may comprise a first actuator extension side, and the second actuator may comprise a second actuator retraction side, wherein the connection system is configured to connect the first actuator extension side and the second actuator retraction side, such that the first actuator extension side and second actuator retraction side are in hydraulic communication.

The first actuator extension side may be a first actuator rod side, and the second actuator retraction side may be a second actuator head side.

The first actuator may further comprise a first actuator retraction side, and the second actuator may further comprise a second actuator extension side, wherein the hydraulic supply system is in hydraulic communication with the first actuator retraction side and the second actuator extension side, such that hydraulic fluid may flow between the hydraulic supply system and the first actuator retraction side, and between the hydraulic supply system and the second actuator extension side.

An area of the first actuator extension side may be approximately equal to an area of the second actuator retraction side to hydraulically constrain the first actuator and the second actuator.

The first actuator may further comprise an equalising component, the equalising component configured to provide fluid communication between the first actuator retraction side and the first actuator extension side.

Leakages of the actuator system over time may cause the position of the first actuator to be misaligned with the position of the second actuator. By providing fluid communication between the sides of the first actuator, this may compensate for any leakages of the actuator system over time, such that the positions of the actuators may be realigned.

The actuator system may further comprise a third actuator, wherein the connection system is further configured to connect the second actuator and the third actuator, such that the second actuator and third actuator are in hydraulic communication to hydraulically constrain the second actuator and the third actuator.

The actuator system may further comprise an accumulator, the accumulator configured to compensate for potential leakages of the actuator system over time.

The actuator system may be a hydraulic thrust reverser actuation system.

According to a second aspect, there is provided an aircraft thrust reverser system comprising the actuator system of the first aspect, the aircraft thrust reverser system further comprising a first translating cowl and a second translating cowl.

The first actuator may be connected to the first translating cowl, such that the first actuator actuates the first translating cowl; and the second actuator may be connected to the second translating cowl, such that the second actuator actuates the second translating cowl.

The first translating cowl and second translating cowl may be configured to open and close air supply hatches comprised in the aircraft thrust reverser system

The first translating cowl and the second translating cowl may be structurally connected, such that the first translating cowl and the second translating cowl are integral with each other.

According to a third aspect, there is provided an aircraft comprising the aircraft thrust reverser system of the second aspect.

The aircraft thrust reverser system of the second aspect may comprise any of the features described with respect to the first aspect. The aircraft of the third aspect may comprise any of the features described with respect to the first and second aspects.

### Brief Description of the Drawings

Various examples will now be described, by way of example only, and with reference to the accompanying drawings, in which:
Figure 1 shows a schematic diagram of an aircraft thrust reverser system; and
Figure 2 shows a schematic diagram of part of an aircraft thrust reverser system.

### Detailed Description

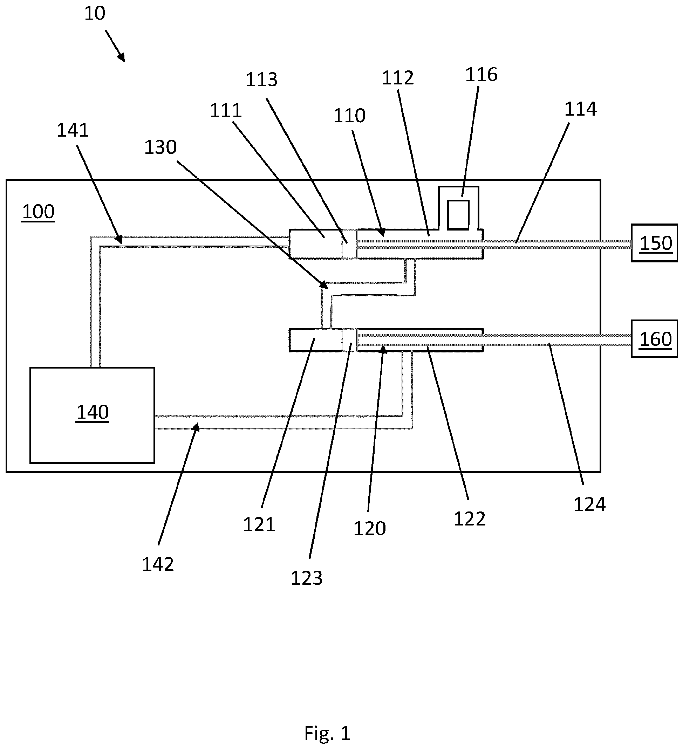

Referring to Fig. 1, an aircraft thrust reverser system 10 is shown. The aircraft thrust reverser system 10 comprises an actuator system 100, a first output component 150 and a second output component 160. The actuator system 100 comprises a first actuator 110, a second actuator 120, a connection system 130 and a hydraulic supply system 140. The hydraulic supply system 140 is configured to supply hydraulic fluid to the actuator system 100. The hydraulic supply system 140 comprises components configured to provide pressure and directional operation of the aircraft thrust reverser system 10. For example, the hydraulic supply system 140 may comprise directional control valves, isolation control valves, aircraft supply lines and aircraft return lines. In the embodiment of Fig. 1, the actuator system 100 is a hydraulic thrust reverser actuation system (HTRAS) 100. In alternative embodiments, the actuator system 100 may be an electro-hydraulic thrust reverser actuation system (EHTRAS). The aircraft thrust reverser system 10 is comprised in an aircraft (not shown).

The first actuator 110 comprises a first actuator retraction side 111 and a first actuator extension side 112. The first actuator retraction side 111 and first actuator extension side 112 are configured to contain hydraulic fluid. The first actuator retraction side 111 and first actuator extension side 112 are separated by a first piston 113, to prevent flow of hydraulic fluid between the first actuator retraction side 111 and the first actuator extension side 112. The first piston 113 is connected to a first rod 114, such that movement of the first piston 113 causes movement of the first rod 114. The first actuator 110 produces a first output movement, wherein the first output movement comprises movement of the first rod 114.

The second actuator 120 comprises a second actuator retraction side 121 and a first actuator extension side 122. The second actuator retraction side 121 and the second actuator extension side 122 have all of the features of the first actuator retraction side 111 and first actuator extension side 112 respectively, and repeated description of common features is omitted. The second actuator retraction side 121 and second actuator extension side 122 are separated by a second piston 123 connected to a second rod 124. The second piston 123 and the second rod 124 have all of the features of the first piston 123 and the first rod 124 respectively, and repeat description of these features is omitted.

In the embodiment shown in Fig. 1, the first actuator retraction side 111 is a first actuator head side 111. The first actuator extension side 112 is a first actuator rod side 112. The first rod 114 extends through the first actuator rod side 112, such that the first rod 114 extends out of an end of the first actuator 110. Movement of the first actuator rod side 112 comprises movement of the first piston 113 and movement of the first rod 114. The second actuator retraction side 121 is a second actuator head side 121. The second actuator extension side 122 is a second actuator rod side 122. The second rod 124 extends through the second actuator rod side 122, such that the second rod 124 extends out of an end of the second actuator 120. Movement of the second actuator rod side 122 comprises movement of the second piston 123 and movement of the second rod 124.

The actuator system 100 is connected to the first output component 150 and the second output component 160. The first actuator 110 is connected to the first output component 150 via the first rod 114. The first actuator 110 is mechanically coupled to the first output component 150. The first actuator 110 actuates the first output component 150. The first actuator 110 provides the first output movement to the first output component 150. The second actuator 120 is connected to the second output component 160 via the second rod 124. The second actuator 120 is mechanically coupled to the second output component 160. The second actuator 120 actuates the second output component 160. The second actuator 120 provides the second output movement to the second output component 160.

In this embodiment, the first output component 150 is a first translating cowl 150, and the second output component 160 is a second translating cowl 160. The first and second translating cowls 150 160 are configured to, for example, open and close hatches comprised in the aircraft thrust reverser system 10 which supply air to the other components i.e. air supply hatches. The first actuator 110 is connected to the first translating cowl 150 such that the first actuator 110 actuates the first translating cowl 150, and the second actuator 120 is connected to the second translating cowl 160, such that the second actuator 120 actuates the second translating cowl 160. In some embodiments, the first translating cowl 150 and the second translating cowl 160 are structurally connected, such that the first translating cowl 150 and the second translating cowl 160 are integral with each other. In some embodiments, the first translating cowl 150 and the second translating cowl 160 may be integral such that the first translating cowl 150 and the second translating cowl 160 define parts of a single composite cowl. In some embodiments, the first translating cowl 150 and the second translating cowl 160 may be integral such that the first translating cowl 150 and the second translating cowl 160 are the same translating cowl component.

In alternative embodiments, the first and second output components 150 160 may be other components of an aircraft thrust reverser system 10 or may form part of another system.

The first actuator 110 is configured such that an increase in volume of hydraulic fluid in the first actuator retraction side 111 causes the first piston 113 to move in an extension direction (i.e. to the right in Fig. 1). When the first piston 113 moves in the extension direction, the volume of hydraulic fluid in the first actuator extension side 112 decreases. When the first piston 113 moves in the extension direction, the first rod 113 moves such that it extends away from the first actuator 110. When the first piston 113 moves in the extension direction, a length of the first rod 114 extending beyond the end of the first actuator 110 increases. When the first rod 114 moves such that it extends away from the first actuator, the first output component 150 moves away from the first actuator 110.

The first actuator 110 is configured such that a decrease in volume of hydraulic fluid in the first actuator retraction side 111 causes the first piston 113 to move in a retraction direction (i.e. to the left in Fig. 1). When the first piston 113 moves in the retraction direction, the volume of hydraulic fluid in the first actuator extension side 112 increases. When the first piston 113 moves in the retraction direction, the first rod 113 moves such that it retracts into the first actuator 110. When the first piston 113 moves in the retraction direction, the length of the first rod 114 extending beyond the end of the first actuator 110 decreases. When the first rod 114 moves such that it retracts into the first actuator, the first output component 150 moves towards the first actuator 110.

The second actuator 120 is configured such that an increase in volume of hydraulic fluid in the second actuator retraction side 121 causes the second piston 123 to move in the extension direction (i.e. to the right in Fig. 1). When the second piston 123 moves in the extension direction, the volume of hydraulic fluid in the second actuator extension side 122 decreases. When the second piston 123 moves in the extension direction, the second rod 124 moves such that it extends away from the second actuator 120. When the second piston 123 moves in the extension direction, a length of the second rod 124 extending beyond the end of the second actuator 120 increases. When the second rod 124 moves such that it extends away from the second actuator, the second output component 160 moves away from the second actuator 120.

The second actuator 120 is configured such that a decrease in volume of hydraulic fluid in the second actuator retraction side 121 causes the second piston 123 to move in the retraction direction (i.e. to the left in Fig. 1). When the second piston 123 moves in the retraction direction, the volume of hydraulic fluid in the second actuator extension side 122 increases. When the second piston 123 moves in the retraction direction, the second rod 124 moves such that it retracts into the second actuator 120. When the second piston 123 moves in the retraction direction, the length of the second rod 124 extending beyond the end of the second actuator 120 decreases. When the second rod 124 moves such that it retracts into the second actuator 120, the second output component 160 moves towards from the second actuator 120.

The actuator system 100 further comprises a first supply connector 141 and a second supply connector 142. The first supply connector 141 is configured to connect the hydraulic supply system 140 and the first actuator 110. The first supply connector 141 is in fluid communication with the hydraulic supply system 140 and the first actuator 110. In this embodiment, the first supply connector 141 is in hydraulic communication with the hydraulic supply system 140 and the first actuator retraction side 111, such that hydraulic fluid may flow between the hydraulic supply system 140 and the first actuator retraction side 111. The second supply connector 142 is configured to connect the hydraulic supply system 140 and the second actuator 120. The second supply connector 142 is in hydraulic communication with the hydraulic supply system 140 and the second actuator 120. In this embodiment, the second supply connector 141 is in fluid communication with the hydraulic supply system 140 and the second actuator extension side 122, such that hydraulic fluid may flow between the hydraulic supply system 140 and the second actuator extension side 122. The hydraulic supply system 140 is configured to control a pressure of hydraulic fluid entering and exiting the hydraulic flow system. The hydraulic supply system 140 is configured to individually control a pressure of hydraulic fluid flowing in the first supply connector 141, and a pressure of hydraulic fluid flowing in the second supply connector 142. The hydraulic supply system 140 controls the pressures, for example, by pumping hydraulic fluid as required. In some embodiments, the pressure of hydraulic fluid flowing in the first supply connector 141 and the pressure of hydraulic fluid in the second supply connector 142 may be the same. In alternative embodiments, the pressure of hydraulic fluid flowing in the first supply connector 141 and the pressure of hydraulic fluid in the second supply connector 142 may not be the same.

The connection system 130 is configured to connect the first actuator 110 and the second actuator 120, such that the first actuator 110 and the second actuator 120 are in hydraulic communication. The first actuator 110 and the second actuator 120 are in hydraulic communication to hydraulically constrain the first actuator 110 and the second actuator 120. The first actuator 110 and the second actuator 120 are connected such that hydraulic fluid may flow between the first actuator 110 and the second actuator 120 via the connection system 130. In the embodiment shown in Fig. 1, the connection system 130 is configured to connect the first actuator extension side 112 and the second actuator retraction side 121, such that the first actuator extension side 112 and the second actuator retraction side 121 are in hydraulic communication. In this embodiment, the first actuator extension side 112 and the second actuator retraction side 121 are connected such that hydraulic fluid may flow between the first actuator extension side 112 and the second actuator retraction side 121 via the connection system 130.

The first actuator 110 and the second actuator 120 are hydraulically constrained such that movement of the first actuator extension side 112 causes movement of the second actuator retraction side 121. As the second actuator retraction side 121 and the second actuator extension side 122 are in hydraulic communication, this means that movement of the first actuator extension side 112 causes movement of the second actuator extension side 122. Movement of the first piston 113 causes movement of the second piston 123.

The first actuator 110 and second actuator 120 are hydraulically constrained such that the first actuator 110 and the second actuator 120 are substantially synchronised. The first actuator 110 and the second actuator 120 being substantially synchronised comprises the first output movement and the second output movement being substantially the same. The first actuator 110 and the second actuator 120 being substantially synchronised further comprises the movement of the second piston 123 being substantially the same as the movement of the first piston 113. The first actuator 110 and the second actuator 120 being substantially synchronised further comprises a speed of the first output movement being substantially the same as a speed of the second output movement. The first actuator 110 and the second actuator 120 being substantially synchronised further comprises a current position of the first actuator extension side 112 being substantially the same as a current position of the second actuator extension side 122. The current position of the first actuator 110 is defined in terms of an extent of the movement of the first piston 113 in the extension and/or retraction directions. The current position of the second actuator 120 is defined in terms of an extent of the movement of the second piston 123 in the extension and/or retraction directions.

The first actuator 110 and second actuator 120 are hydraulically constrained as an area of the first actuator extension side 112 is approximately equal to an area of the second actuator retraction side 121. The area of the first actuator extension side 112 comprises a frontal area of the first piston 113 facing the first actuator extension side 112. The area of the second actuator retraction side 121 comprises a frontal area of the second piston 123 facing the second actuator retraction side 121. A frontal area of the first piston 113 facing the first actuator extension side 112 being substantially equal to a frontal area of the second piston 123 facing the second actuator retraction side 121 means that the first actuator 110 and the second actuator 120 will have different overall sizes. This means that a cross sectional area of hydraulic fluid exiting the first actuator extension side 112 will be substantially equal to a cross sectional area of hydraulic fluid entering the second actuator retraction side 121. This means that a movement of the first piston 113 in the first actuator 110 will be substantially the same as a movement of the second piston 123 in the second actuator. A volumetric change of hydraulic fluid in the first actuator extension side 112 will be substantially equal to a volumetric change in hydraulic fluid in the second actuator extension side 122. Movement of the first actuator 110 causing hydraulic fluid to exit the first actuator 110 will be substantially the same as the movement of the second actuator 120 caused by hydraulic fluid entering the second actuator 120.

In this embodiment, the first actuator 110 and the second actuator 120 being substantially synchronised comprises a current position of the first rod 114 being substantially the same as a current position of the second rod 124. The first actuator 110 and the second actuator 120 being substantially synchronised further comprises the movement of the first translating cowl 150 and the second translating cowl 160 being substantially synchronised.

The first actuator 110 further comprises an equalising component 116 configured to provide fluid communication between the first actuator retraction side 111 and the first actuator extension side 112. The equalising component 116 provides a channel through which hydraulic fluid may flow. The equalising component 116 is configured to allow hydraulic fluid to flow between the first actuator retraction side 111 and first actuator extension side 112, when the first piston 113 moves to a predetermined position in the extension direction. The predetermined position in the extension direction may be close to a maximum extension position of the first actuator 110. If hydraulic fluid is allowed to flow between the first actuator retraction side 111 and the first actuator extension side 112, a pressure across the sides 111 112 is allowed to substantially equalise. If the pressure across the two sides 111 112 is allowed to substantially equalise, the first piston 113 and the second piston 123 will move such that the current position of the first rod 114 and the current position of the second rod 124 are realigned.

In alternative embodiments, the equalising component 116 may be configured to allow hydraulic fluid to flow between the first actuator retraction side 111 and first actuator extension side 112, when the first piston 113 moves to a predetermined position in the retraction direction. The predetermined position in the retraction direction may be close to a maximum retraction position of the first actuator 110.

In alternative embodiments, the equalising component 116 is comprised in the second actuator 120, such that the equalising component 116 is configured to provide fluid communication between the second actuator retraction side 121 and the second actuator extension side 122. In such an embodiment, the equalising component 116 is configured to allow hydraulic fluid to flow between the second actuator retraction side 121 and second actuator extension side 122, when the second piston 123 moves to a predetermined position in the extension direction. The predetermined position in the extension direction may be close to a maximum extension position of the second actuator 120.

In alternative embodiments, the first actuator 110 comprises a first equalising component and the second actuator 120 comprises a second equalising components, wherein the first equalising component and the second equalising component have the features of the equalising component 116 set out above.

In some embodiments, the actuator system 100 further comprises an accumulator (not shown), the accumulator configured to compensate for potential leakages of the actuator system 100 over time.

In alternative embodiments, the hydraulic supply system 140 may instead be in hydraulic communication with the first actuator extension side 112 the second actuator retraction side 121. In such an embodiment, the connection system 130 may be configured to connect the first actuator retraction side 111 and the second actuator extension side 122, such that the first actuator retraction side 111 and the second actuator extension side 122 are in hydraulic communication.

In alternative embodiments, the first actuator retraction side 111 may be a rod side of the first actuator, and the first actuator extension side 112 may be a head side of the first actuator. In alternative embodiments, the second actuator retraction side 121 may be a rod side of the second actuator, and the second actuator extension side 122 may be a head side of the second actuator.

In alternative embodiments, the first actuator retraction side 111 and the first actuator extension side 112 may both be rod sides of the first actuator 110. In alternative embodiments, the second actuator retraction side 121 and the second actuator extension side 122 may both be rod sides of the second actuator 120. If both the retraction sides 111 121 and the extension sides 112 122 of the actuators 110 120 are rod sides, the first actuator 110 and the second actuator 120 may be substantially the same overall size.

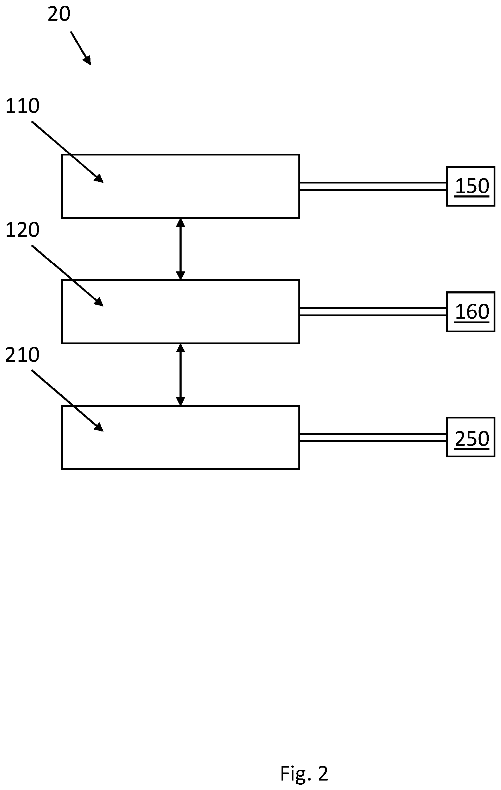

Referring to Figure 2, part of an aircraft thrust reverser system 20 is shown. The aircraft thrust reverser system 20 comprises all of the features of the aircraft thrust reverser system 10, and repeated description of these features is omitted. As described above, the first actuator 110 and the second actuator 120 are in hydraulic communication, to hydraulically constrain the first actuator 110 and the second actuator 120. The aircraft thrust reverser system 20 further comprises a third actuator 210 and a third output component 250. The third output component 250 is a third translating cowl 250. The connection system 130 (not shown in Fig. 2) is further configured to connect the second actuator 120 and the third actuator 210, such that the second actuator 120 and the third actuator 210 are in hydraulic communication to hydraulically constrain the second actuator 120 and the third actuator 210. The second actuator 120 and third actuator 210 are hydraulically constrained such that the second actuator 120 and the third actuator 210 are substantially synchronised. As the first actuator 110 and the second actuator 120 are substantially synchronised, this means that the first actuator 110, the second actuator 120 and the third actuator 210 are substantially synchronised. The third actuator 210 is mechanically coupled to the third output component 250. The third actuator 210 actuates the third output component 250. The third actuator 210 provides a third output movement to the third output component 250.

Various aspects disclosed in the various examples may be used alone, in combination, or in a variety of arrangements not specifically discussed in the examples described in the foregoing and this disclosure is therefore not limited in its application to the details and arrangement of components set forth in the foregoing description or illustrated in the drawings. For example, aspects described in one example may be combined in any manner with aspects described in other examples. Although particular examples have been shown and described, it will be obvious to those skilled in the art that changes and modifications may be made without departing from the invention in its broader aspects. The scope of the following claims should not be limited by the examples set forth in the examples, but should be given the broadest reasonable interpretation consistent with the description as a whole.

## Claims

1. An actuator system for an aircraft thrust reverser system, the actuator comprising a first actuator, a second actuator and a connection system,
wherein the connection system is configured to connect the first actuator and the second actuator, such that the first actuator and second actuator are in hydraulic communication to hydraulically constrain the first actuator and the second actuator.

2. The actuator system of claim 1, wherein the first actuator and the second actuator are hydraulically constrained such that movement of the first actuator and the second actuator is substantially synchronised.

3. The actuator system of any preceding claim, wherein the actuator system further comprises a hydraulic supply system, the hydraulic supply system configured to supply hydraulic fluid to the actuator system.

4. The actuator system of claim 3, wherein the first actuator further comprises a first actuator retraction side, and the second actuator further comprises a second actuator extension side, wherein the hydraulic supply system is in hydraulic communication with the first actuator retraction side and the second actuator extension side, such that hydraulic fluid may flow between the hydraulic supply system and the first actuator retraction side, and between the hydraulic supply system and the second actuator extension side.

5. The actuator system of any preceding claim, wherein the first actuator comprises a first actuator extension side, and the second actuator comprises a second actuator retraction side, wherein the connection system is configured to connect the first actuator extension side and the second actuator retraction side, such that the first actuator extension side and second actuator retraction side are in hydraulic communication.

6. The actuator system of claim 5, wherein the first actuator extension side is a first actuator rod side, and the second actuator retraction side is a second actuator head side.

7. The actuator system of claim 5 or 6, wherein an area of the first actuator extension side is approximately equal to an area of the second actuator retraction side to hydraulically constrain the first actuator and the second actuator.

8. The actuator system of any of claims 5 to 7 when dependent on claim 4, wherein the first actuator further comprises an equalising component, the equalising component configured to provide fluid communication between the first actuator retraction side and the first actuator extension side.

9. The actuator system of any preceding claim, wherein the actuator system further comprises a third actuator, wherein the connection system is further configured to connect the second actuator and the third actuator, such that the second actuator and third actuator are in hydraulic communication to hydraulically constrain the second actuator and the third actuator.

10. The actuator system of any preceding claim, wherein the actuator system is a hydraulic thrust reverser actuation system.

11. An aircraft thrust reverser system comprising the actuator system of any preceding claim, the aircraft thrust reverser system further comprising a first translating cowl and a second translating cowl.

12. The aircraft thrust reverser system of claim 11, wherein the first actuator is connected to the first translating cowl, such that the first actuator actuates the first translating cowl; and the second actuator is connected to the second translating cowl, such that the second actuator actuates the second translating cowl.

13. The aircraft thrust reverser system of claim 12, wherein the first translating cowl and second translating cowl are configured to open and close air supply hatches comprised in the aircraft thrust reverser system.

14. The aircraft thrust reverser system of claims 12 or 13, wherein the first translating cowl and the second translating cowl are structurally connected, such that the first translating cowl and the second translating cowl are integral with each other.

15. An aircraft comprising the thrust reverser system of any of claims 12 to 14.

## Amended claims

### Amended claims in accordance with Rule 137(2) EPC.

1. An aircraft thrust reverser system (10) comprising an actuator system (100), the actuator system (100) comprising a first actuator (110), a second actuator (120) and a connection system (130),
wherein the connection system (130) is configured to connect the first actuator (110) and the second actuator (120), such that the first actuator (110) and second actuator (120) are in hydraulic communication to hydraulically constrain the first actuator (110) and the second actuator (120);
the aircraft thrust reverser system (10) further comprising a first translating cowl (150) and a second translating cowl (160); wherein the first actuator (110) is connected to the first translating cowl (150), such that the first actuator (110) actuates the first translating cowl (150); and the second actuator (120) is connected to the second translating cowl (160), such that the second actuator (120) actuates the second translating cowl (160);
**characterized in that** the first translating cowl (150) and the second translating cowl (160) are structurally connected, such that the first translating cowl (150) and the second translating cowl (160) are integral with each other.

2. The aircraft thrust reverser system (10) of claim 1, wherein the first actuator (110) and the second actuator (120) are hydraulically constrained such that movement of the first actuator (110) and the second actuator (120) is substantially synchronised.

3. The aircraft thrust reverser system (10) of any preceding claim, wherein the actuator system (100) further comprises a hydraulic supply system (140), the hydraulic supply system (140) configured to supply hydraulic fluid to the actuator system (100).

4. The aircraft thrust reverser system (10)of claim 3, wherein the first actuator (110) further comprises a first actuator retraction side (111), and the second actuator (120) further comprises a second actuator extension side (122), wherein the hydraulic supply system (140) is in hydraulic communication with the first actuator retraction side (111) and the second actuator extension side (122), such that hydraulic fluid may flow between the hydraulic supply system (140) and the first actuator retraction side (111), and between the hydraulic supply system (140) and the second actuator extension side (122).

5. The aircraft thrust reverser system (10) of any preceding claim, wherein the first actuator (110) comprises a first actuator extension side (112), and the second actuator (120) comprises a second actuator retraction side (121), wherein the connection system (130) is configured to connect the first actuator extension side (112) and the second actuator retraction side (121), such that the first actuator extension side (112) and second actuator retraction side (121) are in hydraulic communication.

6. The aircraft thrust reverser system (10) of claim 5, wherein the first actuator extension side (112) is a first actuator rod side, and the second actuator retraction side (121) is a second actuator head side.

7. The aircraft thrust reverser system (10)of claim 5 or 6, wherein an area of the first actuator extension side (112) is approximately equal to an area of the second actuator retraction side (121) to hydraulically constrain the first actuator (110) and the second actuator (120).

8. The aircraft thrust reverser system (10)of any of claims 5 to 7 when dependent on claim 4, wherein the first actuator (110) further comprises an equalising component (116), the equalising component (116) configured to provide fluid communication between the first actuator retraction side (111) and the first actuator extension side (112).

9. The aircraft thrust reverser system (10)of any preceding claim, wherein the actuator system (100) further comprises a third actuator (210), wherein the connection system (130) is further configured to connect the second actuator (120) and the third actuator (210), such that the second actuator (120) and third actuator (210) are in hydraulic communication to hydraulically constrain the second actuator (120) and the third actuator (210).

10. The aircraft thrust reverser system (10)of any preceding claim, wherein the actuator system (100) is a hydraulic thrust reverser actuation system.

11. The aircraft thrust reverser system (10) of any preceding claim, wherein the first translating cowl (150) and second translating cowl (160) are configured to open and close air supply hatches comprised in the aircraft thrust reverser system (10).

12. An aircraft comprising the aircraft thrust reverser system (10) of any preceding claim substantially synchronised.
